# EUROPÄISCHE PATENTSCHRIFT

(11) **EP 3 664 593 B1**
(45) Veröffentlichungstag und Bekanntmachung des Hinweises auf die Patenterteilung: **02.06.2021**
(21) Anmeldenummer: 18750447.7
(22) Anmeldetag: 09.08.2018
(51) Int. Cl.: A01D 34/13

(54) **MESSERKLINGE FÜR EIN MÄHMESSER EINER LANDWIRTSCHAFTLICHEN ERNTEMASCHINE**
KNIFE BLADE FOR A CUTTING KNIFE OF AN AGRICULTURAL HARVESTING MACHINE
LAME POUR COUTEAU D'UNE MOISSONNEUSE AGRICOLE

(30) Priorität: 11.08.2017 EP 17185901
(43) Veröffentlichungstag der Anmeldung: 17.06.2020
(73) Patentinhaber: SMF - Holding GmbH, 57612 Eichelhardt (DE)
(72) Erfinder: OTTO, Sascha, 57612 Racksen (DE); SCHMIDT, Ralf, 57629 Mörsbach (DE)
(74) Vertreter: Neumann Müller Oberwalleney & Partner Patentanwälte
(86) Internationale Anmeldenummer: PCT/EP2018/071674
(87) Internationale Veröffentlichungsnummer: WO 2019/030341

(56) Entgegenhaltungen:
- EP-A1- 0 054 006
- US-A- 4 223 514
- US-A1- 2008 000 210
- US-B1- 6 857 255

## Beschreibung

Die Erfindung betrifft eine Messerklinge für ein Mähmesser einer landwirtschaftlichen Erntemaschine, mit einer Klingenoberseite und einer Klingenunterseite, wobei eine Oberfläche der Klingenunterseite aus einer in einer Ebene angeordneten Planfläche und einem oberhalb der Ebene verlaufenden Aussparungsbereich zusammengesetzt ist. Eine Höhe der Messerklinge entspricht einem maximalen Abstand zwischen der Klingenoberseite und der Planfläche in einer Normalenrichtung zu der Ebene, wobei eine Materialstärke der Messerklinge einem Abstand zwischen der Klingenoberseite und der Klingenunterseite entspricht, sowie ein Verfahren zur Herstellung einer Messerklinge.

Eine Messerklinge ist zum Beispiel aus der DE 32 08 270 C2 bekannt. Die dort gezeigte Messerklinge ist dreieckig gestaltet und weist zwei Schneidenbereiche auf, die spitzwinklig zueinander verlaufen. Die beiden Schneidenbereiche weisen jeweils einseitig angeschliffene Schneiden auf, die Einkerbungen aufweisen, so dass Schneidzähne und Zahnzwischenräume gebildet sind. Die Schneidzähne laufen hierbei jeweils spitz, eine Zahnspitze bildend, zu.

Eine weitere Messerklinge ist aus der US 4 223 514 A bekannt. Die dort gezeigte Messerklinge hat eine geschlossene Wellenform mit konkaven und konvexen Bereichen.

Messerklingen dieser Art werden üblicherweise bei Mähwerken von landwirtschaftlichen Erntemaschinen verwendet. Eine Vielzahl von Messerklingen ist hierbei nebeneinander angeordnet auf einer Messerschiene verschraubt oder vernietet, wobei die Messerspitzen, die durch die spitz zulaufenden Schneidenbereiche gebildet sind, in Arbeitsrichtung weisen. Die so gebildeten Messer sind an einem Messerbalken quer zur Arbeitsrichtung hin- und herbewegend geführt. Die Schneiden der Messerklingen wirken hierbei mit am Messerbalken befestigten Mähfingern zusammen, wobei die Mähfinger Gegenschneiden in Form eines Klingenspalts bilden. Hierbei sind die Schneidenbereiche der Messerklingen winklig zur Arbeitsrichtung ausgerichtet und die Gegenschneiden der Mähfinger annähernd parallel zur Arbeitsrichtung, so dass das Erntegut in den Schneidbereich zwischen den Messerklingen und den Mähfingern eintauchen kann und durch die Hin- und Herbewegung des Mähmessers abgeschnitten wird. Eine alternative Möglichkeit besteht in dem Einsatz als Doppelmesser mit zwei gegenläufigen Mähmessern, bzw. einem feststehenden und einem bewegten Mähmesser ohne Mähfinger. Eine Stärke der Messerklinge ist so auf das lichte Maß des Klingenspalts angepasst, dass ein gewisser Abstand zwischen der Messerklinge und der jeweiligen Gegenschneide vorhanden ist, da das lichte Maß des Klingenspalts einer Toleranz unterliegt und die Messerklinge im Betrieb durch einwirkende Kräfte des Ernteguts gebogen wird. Andererseits darf der Abstand zwischen der Messerklinge und der jeweiligen Gegenschneide nicht zu groß sein, da dann Erntegut in den Klingenspalt eingezogen werden kann und nicht geschnitten wird. Der Materialeinsatz zur Herstellung von Messerklingen entsprechender Dicke ist vergleichsweise hoch. Dementsprechend sind mit den Messerklingen erhebliche Massen durch den Messerantrieb hin und her zu bewegen.

Eine Aufgabe der vorliegenden Erfindung besteht darin, eine massenreduzierte Messerklinge bereitzustellen, bei der die notwendige Stabilität dennoch gewährleistet ist.

Die Aufgabe wird durch die Gegenstände der unabhängigen Ansprüche 1, 2 und 15 gelöst. In den Unteransprüchen sind jeweils vorteilhafte Ausführungsformen und bevorzugte Weiterbildungen angegeben.

Die erfindungsgemäße Messerklinge für ein Mähmesser einer landwirtschaftlichen Erntemaschine weist eine Klingenoberseite und einer Klingenunterseite auf, wobei eine Oberfläche der Klingenunterseite aus einer in einer Ebene angeordneten Planfläche und einem oberhalb der Ebene verlaufenden Aussparungsbereich zusammengesetzt ist. Eine Höhe der Messerklinge entspricht einem maximalen Abstand zwischen der Klingenoberseite und der Planfläche in einer Normalenrichtung zu der Ebene, wobei eine Materialstärke der Messerklinge einem Abstand zwischen der Klingenoberseite und der Klingenunterseite entspricht. Die Materialstärke der Messerklinge ist erfindungsgemäß zumindest bereichsweise geringer als die Höhe der Messerklinge

Die erfindungsgemäße Messerklinge weist mindestens eine Ausnehmung auf, wobei die Ausnehmung in der Messerklinge angeordnet ist und wobei eine Teilfläche der Planfläche der Oberfläche der Klingenunterseite um die mindestens eine Ausnehmung herum angeordnet ist. Alternativ oder zusätzlich sind an einer Hinterkante der Messerklinge an der Oberfläche der Klingenunterseite mehrere Teilflächen der Planfläche angeordnet, wobei die Teilflächen an der Hinterkante durch den Aussparungsbereich voneinander getrennt sind.

Ein Bereich, in dem die Materialstärke geringer ist, als die Höhe, umfasst vorzugsweise mindestens eine Hälfte der Oberfläche der Klingenunterseite, besonders bevorzugt 90 Prozent der Oberfläche der Klingenunterseite. Insbesondere bevorzugt ist die Materialstärke in jedem Bereich der Messerklinge geringer als die Höhe.

Bevorzugt ist an mindestens einem Randbereich der Messerklinge eine Schnittkante ausgebildet, wobei die Oberfläche der Klingenunterseite mindestens in dem Randbereich eine Teilfläche der Planfläche aufweist. Gemäß einer bevorzugten Ausführungsform ist an der Oberfläche der Klingenunterseite außerhalb der Teilfläche mindestens eine Verschleißmarke zur Bestimmung eines Verschleißes an der Schnittkante angeordnet, wobei die Verschleißmarke eine in Normalenrichtung zwischen der Planfläche und dem Aussparungsbereich liegende Höhe markiert. Die Verschleißmarke zeigt an, wann der Verschleiß an der Schnittkante so groß ist, dass diese nicht mehr in der Planfläche liegt, sondern zwischen der Planfläche und dem Aussparungsbereich. Die Verschleißmarke ist bevorzugt zwischen der Planfläche und dem Aussparungsbereich angeordnet und kann beispielsweise in Form einer Einprägung gestaltet sein. Alternativ kann die Verschlei ßmarke auch durch den Aussparungsbereich selbst gebildet sein, das heißt, der Verschleiß wird dadurch erkennbar, dass die Schnittkante innerhalb des Aussparungsbereichs liegt.

Bevorzugt ist mindestens eine Befestigungsausnehmung vorgesehen, wobei an der Oberfläche der Klingenunterseite eine weitere Teilfläche der Planfläche um die Befestigungsausnehmung herum angeordnet ist. Die Klingenoberseite weist bevorzugt eine die Befestigungsausnehmung umfangende Einprägung auf, wobei die Einprägung einem Befestigungsmittel entsprechend geformt ist.

Bei der erfindungsgemäßen Messerklinge handelt es sich bevorzugt um eine sogenannte Dreiecksklinge, die beispielsweise an Mähwerken von Mähdreschern eingesetzt werden. Ebenfalls bevorzugt ist die erfindungsgemäße Messerklinge alternativ als Rotorklinge oder als Häckslerklinge ausgebildet, die eine rechteckige Grundform aufweisen.

Sämtliche nachfolgend mit Bezug auf weitere Erfindungsgegenstände bzw. die Aufgabe lösenden erfindungsgemäßen Ausführungsformen beschriebenen Merkmale sind beliebig mit den zuvor beschriebenen erfindungswesentlichen und bevorzugten Merkmalen kombinierbar.

Eine erfindungsgemäße Ausführungsform der Messerklinge für ein Mähmesser einer landwirtschaftlichen Erntemaschine wird in Anspruch 1 definiert.

Eine oder mehrere Ausnehmungen in der Messerklinge sind vorteilhaft, um eine Gewichtsreduzierung zu erreichen. Um Nachteile hinsichtlich der Stabilität in einem Bereich der Ausnehmung zu vermeiden, ist eine die Ausnehmung umfangende Teilfläche der Planfläche vorteilhaft. Diese Teilflächen um die Ausnehmung oder Ausnehmungen der Messerklinge herum bilden zusammen mit den übrigen Teilflächen die Planfläche an der Klingenunterseite. Abgesehen von der Lage dieser Teilflächen um die Ausnehmung oder Ausnehmungen der Messerklinge herum unterscheiden sie sich nicht von anderen Teilflächen der Planfläche an der Klingenunterseite. Zur Unterscheidung der Teilflächen werden die Teilflächen der Planfläche um die Ausnehmung oder Ausnehmungen der Messerklinge herum auch als Ausnehmungsteilflächen der Planfläche an der Oberfläche der Klingenunterseite bezeichnet.

Bevorzugt ist die Ausnehmung als eine zentrale Ausnehmung ausgeführt. Alternativ ist eine Messerklinge mit zwei oder mehr Ausnehmungen bevorzugt, wobei die Teilfläche der Planfläche der Oberfläche der Klingenunterseite um die Ausnehmungen herum angeordnet ist.

Eine bevorzugte Ausführungsform der Messerklinge ist dadurch gekennzeichnet, dass eine Oberfläche der Klingenoberseite aus einer in einer oberen Ebene angeordneten oberen Planfläche und einem außerhalb der oberen Ebene verlaufenden Oberseitenbereich zusammengesetzt ist.

Die obere Planfläche hat den Vorteil, dass die Messerklinge trotz Gewichtsreduzierung grundsätzlich auch mit der Klingenoberseite nach unten angeordnet verwendet werden kann. Zum Befestigen der Messerklinge an einem Messerbalken wird eine entsprechende Planfläche benötigt. Diese Planfläche liegt im verbundenen Zustand an einer entsprechenden ebenen Fläche des Messerbalkens an. Es besteht ein definierter Abstand zwischen der Planfläche, welche im Sinne der Erfindung auch als untere Planfläche bezeichnet wird, und der oberen Planfläche, wobei die Materialstärke zur Gewichtsreduzierung der Messerklinge erfindungsgemäß geringer ist als dieser Abstand.

Gemäß der erfindungsgemäßen Ausführungsform nach Anspruch 2 sind an einer Hinterkante der Messerklinge an der Oberfläche der Klingenunterseite mehrere Teilflächen der Planfläche angeordnet. Diese Teilflächen an der Hinterkante der Messerklinge bilden zusammen mit den übrigen Teilflächen die Planfläche an der Klingenunterseite. Abgesehen von der Lage dieser Teilflächen an der Hinterkante unterscheiden sie sich nicht von anderen Teilflächen der Planfläche an der Klingenunterseite. Zur Unterscheidung der Teilflächen werden die Teilflächen der Planfläche an der Hinterkante der Messerklinge auch als hintere Teilflächen der Planfläche an der Oberfläche der Klingenunterseite bezeichnet. Die Teilflächen an der Hinterkante sind durch den Aussparungsbereich voneinander getrennt.

An der Hinterkante der Messerklinge an der Oberfläche der Klingenoberseite sind, weiterhin bevorzugt, mehrere obere Teilflächen der oberen Planfläche angeordnet. Die oberen Teilflächen bilden gemeinsam eine obere Planfläche an der Oberfläche der Klingenoberseite und unterscheiden sich insofern von den Teilflächen die Planfläche an der Klingenunterseite.

Besonders bevorzugt sind die oberen Teilflächen auf der Oberseite dem Aussparungsbereich auf der Unterseite gegenüberliegend angeordnet, zumindest im Bereich der Hinterkante der Messerklinge. Dadurch sind weiterhin besonders bevorzugt die oberen Teilflächen entlang der Hinterkante abwechselnd mit den Teilflächen, also hinteren Teilflächen, auf der Unterseite angeordnet.

Dadurch ergibt sich eine Art Wellenform der Hinterkante der Messerklinge, mit abgeflachten Wellenbergen und Wellentälern in Form der oberen Teilflächen auf der Oberseite und der hinteren Teilflächen auf der Unterseite. Diese erlaubt besonders vorteilhaft, die Messerklinge ebenso mit der Klingenoberseite nach unten, wie mit der Klingenunterseite nach unten zu montieren.

Die Begriffe oben und unten, sowie Klingenoberseite und Klingenunterseite beziehen sich auf eine generelle Einbaulage der Messerklinge an einer Erntemaschine, wirken in dieser Hinsicht jedoch nicht einschränkend, sondern dienen der begrifflichen Unterscheidung beider Seiten der Messerklinge. Insbesondere kann die erfindungsgemäße Messerklinge auch mit der Klingenoberseite nach unten weisend, bezüglich der Erntemaschine, montiert werden. Besonders vorteilhaft ist es, die Messerklingen entlang des Messerbalkens abwechselnd, einmal mit der Klingenunterseite nach unten und einmal mit der Klingenoberseite nach unten, zu montieren.

Bevorzugt ist an mindestens einem Randbereich der Messerklinge eine Schnittkante ausgebildet, wobei die Oberfläche der Klingenunterseite mindestens in dem Randbereich eine Teilfläche oder mehrere getrennte Teilflächen der Planfläche aufweist. Diese Teilflächen in dem Randbereich der Messerklinge bilden zusammen mit den weiteren Teilflächen die Planfläche an der Klingenunterseite. Abgesehen von der Lage dieser Teilflächen in dem Randbereich unterscheiden sie sich nicht von anderen Teilflächen der Planfläche an der Klingenunterseite. Zur Unterscheidung der Teilflächen werden die Teilflächen in dem Randbereich der Messerklinge auch als Randteilflächen der Planfläche an der Oberfläche der Klingenunterseite bezeichnet.

Bevorzugt ist eine oder mehrere Befestigungsausnehmungen vorgesehen, wobei an der Oberfläche der Klingenunterseite weitere Teilflächen der Planfläche um die Befestigungsausnehmungen herum angeordnet sind. Diese Teilflächen um die Befestigungsausnehmungen der Messerklinge herum bilden zusammen mit den weiteren Teilflächen die Planfläche an der Klingenunterseite. Abgesehen von der Lage dieser Teilflächen um die Befestigungsausnehmungen unterscheiden sie sich nicht von anderen Teilflächen der Planfläche an der Klingenunterseite. Zur Unterscheidung der Teilflächen werden die Teilflächen um die Befestigungsausnehmungen der Messerklinge auch als Befestigungsteilflächen der Planfläche an der Oberfläche der Klingenunterseite bezeichnet.

Ein weiterer Erfindungsgegenstand betrifft ein Verfahren zur Herstellung der beschriebenen erfindungsgemäßen Messerklinge, wobei mindestens ein Formgebungsschritt vorgesehen ist, bei dem die Messerklinge derart geformt wird, dass die Materialstärke der Messerklinge zumindest bereichsweise geringer ist, als die Höhe der Messerklinge. Bevorzugt wird bei dem Formgebungsschritt ein urformendes oder ein umformendes Verfahren angewendet. Weiterhin bevorzugt ist mindestens ein Weiterbearbeitungsschritt vorgesehen ist, bei dem an der Oberfläche der Klingenunterseite die Planfläche mittels mindestens eines spanenden Fertigungsverfahrens bearbeitet wird.

Die Erfindung wird nachfolgend anhand eines bevorzugten Ausführungsbeispiels mit Bezugnahme auf die beiliegenden Zeichnungen näher erläutert. Die Erläuterungen betreffen die erfindungsgemäße Messerklinge ebenso, wie das erfindungsgemäße Fertigungsverfahren zur Herstellung der Messerklinge. Die Ausführungen sind lediglich beispielhaft und schränken den allgemeinen Erfindungsgedanken nicht ein.

Es zeigen
Figuren 1 bis 5 ein erstes Ausführungsbeispiel einer erfindungsgemäßen Messerklinge in verschiedenen Ansichten;
Figuren 6 bis 10 ein zweites Ausführungsbeispiel einer erfindungsgemäßen Messerklinge in verschiedenen Ansichten;
Figuren 11 bis 15 ein drittes Ausführungsbeispiel einer erfindungsgemäßen Messerklinge in verschiedenen Ansichten; und
Figuren 16 bis 20 ein viertes Ausführungsbeispiel einer erfindungsgemäßen Messerklinge in verschiedenen Ansichten.

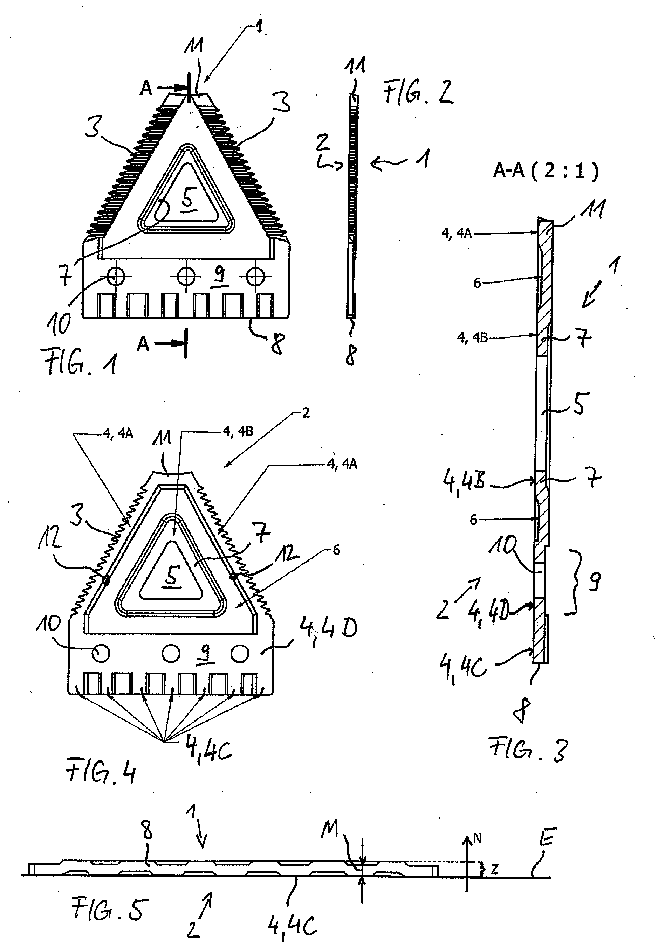

In der Figur 1 ist die erfindungsgemäße Messerklinge gemäß einer ersten Ausführungsform in einer Ansicht auf eine Klingenoberseite 1 dargestellt. Die Messerklinge weißt zwei Schneidebereiche 3 auf, in denen der Rand der Messerklinge mit einer Schneide zum Schneiden von Erntegut versehen ist. In einem vorderen Bereich der Messerklinge, der im Folgenden als Messerspitze 11 bezeichnet wird, unabhängig davon, ob dieser tatsächlich spitz, oder wie im Ausführungsbeispiel, eher stumpf geformt ist, laufen die Schneidbereiche 3 annähernd zusammen und bilden so die in etwa dreieckförmige Gestalt des vorderen Teils der Messerklinge. Dieser Teil der Messerklinge weist auch eine etwa dreieckförmige Ausnehmung 5 mit einem umlaufenden Randbereich 7 auf. Die gezeigte Messerklinge wird auch als Dreiecksklinge bezeichnet. Es könnte aber ebenso eine Rotorklinge oder eine Häckslerklinge erfindungsgemäß gestaltet sein, die eine eher rechteckige Grundform aufweist. In einer Fahrt- und Arbeitsrichtung einer landwirtschaftlichen Erntemaschine mit einem Mähmesser, welches die dargestellte Messerklinge umfasst, wäre die Messerspitze 11 vorn und eine Hinterkante 8 der Messerklinge hinten. Sofern im Folgenden die Begriffe vorn und hinten verwendet werden, beziehen diese sich auf die Arbeitsrichtung der Erntemaschine. Die Bewegungsrichtung des Mähmessers mit der Messerklinge zum Schneiden des Ernteguts relativ zu der Erntemaschine ist quer zur Arbeitsrichtung, insbesondere in etwa rechtwinklig dazu, in Einbaulage horizontal oder leicht angewinkelt, was der Zeichenebene in Figur 1 entspricht. An den vorderen, in der Ansicht etwa dreieckförmigen Teil der Messerklinge schließt sich ein in der Ansicht etwa rechteckförmiger Befestigungsbereich 9 an, welcher mit der Hinterkante 8 abschließt. Der Befestigungsbereich weist Befestigungsmittel 10 zum Festlegen der Messerklinge auf, welche in der Regel an einem Messerbalken (nicht dargestellt) befestigt wird, um mit einer Vielzahl weiterer Messerklingen das Mähmesser zu bilden. Als Befestigungsmittel sind in dem Ausführungsbeispiel Bohrungen 10 vorgesehen, die Beispielsweise zur Herstellung von Schraubverbindungen dienen können.

In der Figur 2 ist die Messerklinge aus Figur 1 in einer um 90 Grad gedrehten Ansicht von der Seite dargestellt, in der die Lage der Messerspitze 11 vorn und der Hinterkante 8 hinten, sowie die insgesamt flache Form der Messerklinge mit der Oberseite 1 und einer Unterseite 2 erkennbar sind.

In der Figur 3 ist ein Schnitt entlang der Linie A-A aus Figur 1 in zweifacher Vergrößerung dargestellt. Die Figur 4 zeigt eine Ansicht auf die Unterseite 2 der Messerklinge und die Figur 5 zeigt wiederum eine gegenüber der Figur 1 um 90 Grad gedrehte Ansicht auf die Hinterkante 8 in einer vergrößerten Darstellung.

Nachfolgend wird auf die Figuren 1 bis 5 gemeinsam Bezug genommen. Die Ausführungsform der erfindungsgemäßen Messerklinge für ein Mähmesser einer landwirtschaftlichen Erntemaschine weist eine Oberfläche der Klingenunterseite 2 auf, welche aus einer in einer Ebene E (vgl. Figur 5) angeordneten Planfläche 4 und einem oberhalb der Ebene verlaufenden Aussparungsbereich 6 zusammengesetzt ist, wie in den Figuren 3 und 4 zu erkennen ist. Eine Höhe Z der Messerklinge entspricht einem maximalen Abstand zwischen der Klingenoberseite 1 und der Planfläche 4 in einer Normalenrichtung N zu der Ebene E, wie in Figur 5 dargestellt. Eine Materialstärke M der Messerklinge entspricht wiederum einem Abstand zwischen der Klingenoberseite 1 und der Klingenunterseite 2, welcher sinnvollerweise ebenfalls in Normalenrichtung N gemessen wird. Die Materialstärke M der Messerklinge ist dabei erfindungsgemäß zumindest bereichsweise geringer, als die Höhe Z der Messerklinge, wie beispielhaft anhand einer Messstelle in der Figur 5 dargestellt. Grundsätzlich kann die Materialstärke der Messeklinge in bestimmten Bereichen auch größer sein, nämlich bis maximal zu der Höhe Z der Messerklinge. Ein solcher Bereich ist in der Figur 3 erkennbar, nahe der Messerspitze 11, beispielsweise. Es wäre jedoch auch denkbar, dass die Materialstärke M in jedem Bereich der Messerklinge geringer ist, als deren Höhe Z. Bevorzugt umfasst ein Bereich, in dem die Materialstärke M geringer ist, als die Höhe Z mindestens eine Hälfte der Oberfläche der Klingenunterseite 2.

Die Planfläche 4 ist bevorzugt ein Fläche, deren Planarität, auch als Planizität bezeichnet, größer ist als bei dem Aussparungsbereich 6. Beliebige Punkte auf der Planfläche 4 sind also räumlich in der Ebene E angeordnet. Der Aussparungsbereich 6 bildet ebenfalls eine Fläche, die jedoch uneben, also gekrümmt oder gewölbt sein kann, so dass Punkte auf der Fläche des Aussparungsbereichs 6 räumlich in unterschiedlichen Ebenen angeordnet sind. Als Planarität wird auch einen gewisse Oberflächengüte bezeichnet die sich auf eine Oberflächenrauigkeit bezieht. Der Begriff Planfläche ist jedoch nicht als Beanspruchung einer bestimmten Oberflächengüte zu verstehen. Die Planfläche 4 kann natürlich mittels mindestens eines spanenden Fertigungsverfahrens bearbeitet sein, um eine gewisse Oberflächenrauigkeit zu erhalten. Der Fachmann erkennt jedoch, dass die Planfläche 4 im Sinne der Erfindung auch ohne Bearbeitung der Oberfläche, bereits durch ein urformendes Verfahren, wie Gießen oder Sintern, herstellbar ist. Der Fachmann erkennt, dass die Oberfläche der Klingenoberseite 1 ebenfalls flach ausgeführt sein wird, da die Höhe Z der Messerklinge einem Klingenspalt angepasst sein muss, mit dem die Messerklinge zusammenwirkt. Die Bezeichnungen Klingenoberseite 1 und Klingenunterseite 2 sind willkürlich gewählt und entsprechen der überwiegend üblichen Einbaulage der Messerklinge. Die erfindungsgemäße Messerklinge kann ebenso in einer Einbaulage mit der Klingenunterseite nach oben eingebaut sein, je nachdem, wie das Schneidwerk der Erntemaschine aufgebaut ist.

Die Planfläche 4 umfasst eine Mehrzahl an Teilflächen. In den Schneidenbereichen 3 der Messerklinge weist die Oberfläche der Klingenunterseite 2 eine Teilfläche 4A der Planfläche 4 auf. Zur Unterscheidung der Teilflächen 4A werden die Teilflächen 4A in dem Randbereich der Messerklinge auch als Randteilflächen 4A der Planfläche 4 an der Oberfläche der Klingenunterseite 2 bezeichnet. An der Oberfläche der Klingenunterseite 2 sind bevorzugt unmittelbar an der in den Schneidenbereichen 3 angeordneten Teilfläche 4A Verschleißmarken 12 zur Bestimmung eines Verschleißes an der Schnittkante angeordnet. Die Verschleißmarken 12 sind in dem Aussparungsbereich 6 direkt an der Grenze zu der Planfläche 4 angeordnet, wobei die Verschleißmarken 12 eine in der Normalenrichtung N zwischen der Planfläche 4 und dem umgebenden Aussparungsbereich 6 liegende Höhe markieren. Sobald der Verschleiß eine der Verschleißmarken 12 erreicht hat, kann beispielsweise ein Austausch des Messers vorgenommen werden. Die Verschleißmarken 12 können beispielsweise in Form einer Einprägung oder Abschrägung vorgenommen werden. In einer abgewandelten alternativen Ausführungsform kann die Verschleißmarke 12 auch durch den Aussparungsbereich 6 gebildet sein. In diesem Fall kann auf eine Einprägung oder Abschrägung verzichtet werden.

Eine weitere Teilfläche 4B der Planfläche 4 der Oberfläche der Klingenunterseite 2 ist um die Ausnehmung 5 herum, in dem Randbereich 7 der Ausnehmung 5 angeordnet. Zur Unterscheidung der Teilflächen 4B werden die Teilflächen der Planfläche um die Ausnehmung 5 oder mögliche mehrere Ausnehmungen 5 der Messerklinge herum auch als Ausnehmungsteilflächen 4B der Planfläche 4 an der Oberfläche der Klingenunterseite 2 bezeichnet. An der Hinterkante 8 der Messerklinge sind an der Oberfläche der Klingenunterseite 2 eine Mehrzahl von Teilflächen 4C der Planfläche 4 angeordnet. Zur Unterscheidung der Teilflächen 4C werden die Teilflächen der Planfläche an der Hinterkante 8 der Messerklinge auch als hintere Teilflächen 4C der Planfläche an der Oberfläche der Klingenunterseite 2 bezeichnet. Schließlich ist noch eine Teilfläche 4D der Planfläche 4 in dem Befestigungsbereich 9 angeordnet. Zur Unterscheidung der Teilflächen 4D werden die Teilflächen um die Befestigungsausnehmungen 10 der Messerklinge auch als Befestigungsteilflächen 4D der Planfläche an der Oberfläche der Klingenunterseite 2 bezeichnet. Die Teilflächen 4A, 4C, 4D der Planfläche in den Schneidenbereichen 3, im Befestigungsbereich 9 und an der Hinterkante 8 der Messerklinge sind im Ausführungsbeispiel zusammenhängend, während die Teilfläche 4B der Planfläche 4 in dem Randbereich 7 der Ausnehmung 5 durch den Aussparungsbereich 6 von den anderen Teilflächen 4A, 4C, 4D getrennt ist. Die einzelnen Teilflächen 4C an der Hinterkante 8 sind ebenfalls jeweils durch den Aussparungsbereich 6 voneinander getrennt und lediglich über die Teilfläche 4D der Planfläche 4 im Befestigungsbereich 9 verbunden. Die Teilfläche 4D der Planfläche 4 im Befestigungsbereich 9 ist um die Befestigungsbohrungen 10 herum angeordnet.

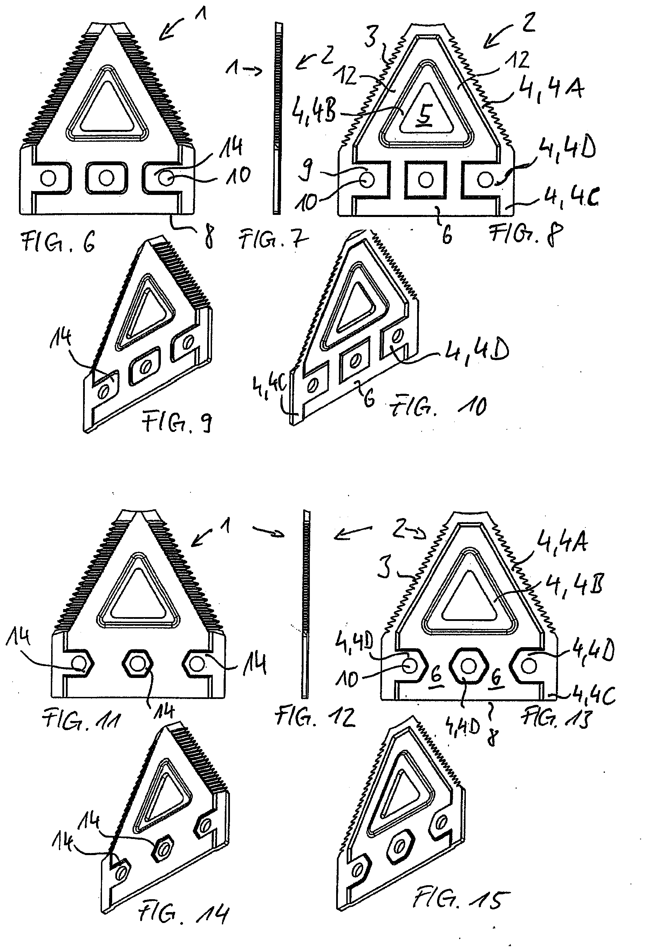

Die Figuren 6 bis 10 zeigen ein zweites Ausführungsbeispiel der erfindungsgemäßen Messerklinge in verschiedenen Ansichten und werden im Folgenden gemeinsam beschrieben. Die wesentlichen Merkmale entsprechen der Ausführungsform gemäß den Figuren 1 bis 5, weshalb gleiche Bezugszeichen gleiche Teile benennen und der Übersichtlichkeit halber teilweise weggelassen wurden und zur Vermeidung von Wiederholungen nicht erneut im Detail beschrieben werden.

Die Ausführungsform der erfindungsgemäßen Messerklinge gemäß der Figuren 6 bis 10 unterscheidet sich im Wesentlichen durch die Gestaltung der Hinterkante 8 und des Befestigungsbereichs 9 der Messerklinge. Wie insbesondere in Figur 8 erkennbar ist, sind nur zwei Teilflächen 4C der Planfläche 4 an der Hinterkante 8 gebildet, welche durch einen längeren Abschnitt des Aussparungsbereichs 6 getrennt sind. Die Teilfläche 4D der Planfläche 4 im Befestigungsbereich 9 ist in dem Ausführungsbeispiel nicht zusammenhängend, sondern besteht aus drei einzelnen Teilfläche 4D, welche jeweils um die Befestigungsbohrungen 10 herum angeordnet sind. Auf der Klingenoberseite 1 befinden sich den Teilfläche 4D der Planfläche 4 im Befestigungsbereich 9 entsprechende rechteckförmige Vertiefungen 14, die dementsprechend ebenfalls um die Befestigungsbohrungen 10 herum angeordnet sind. Diese erleichtern vorzugsweise das Befestigen der Messerklinge mit Schraubbolzen, da ein Mehrkant-Schraubkopf in der Vertiefung 14 gehindert wird, sich zu drehen. Die Verschleißmarke 12 ist bei der vorliegenden Ausführungsform innerhalb des Aussparungsbereichs 6 angeordnet bzw. durch diesen gebildet.

Die Figuren 11 bis 15 zeigen ein drittes Ausführungsbeispiel der erfindungsgemäßen Messerklinge in verschiedenen Ansichten und werden im Folgenden gemeinsam beschrieben. Die wesentlichen Merkmale entsprechen der Ausführungsform gemäß den Figuren 1 bis 5, weshalb gleiche Bezugszeichen gleiche Teile benennen und der Übersichtlichkeit halber teilweise weggelassen wurden und zur Vermeidung von Wiederholungen nicht erneut im Detail beschrieben werden. Die Ausführungsform der erfindungsgemäßen Messerklinge gemäß der Figuren 11 bis 15 entspricht in der Gestaltung der Hinterkante 8 dem zweiten Ausführungsbeispiel, so dass hierauf nicht weiter eingegangen wird.

Die hier ebenfalls vereinzelten drei Teilflächen 4D der Planfläche 4 im Befestigungsbereich 9 sind, wie gehabt, jeweils um die Befestigungsbohrungen 10 herum angeordnet. Auf der Klingenoberseite 1 befinden sich den Teilfläche 4D der Planfläche 4 im Befestigungsbereich 9 entsprechend, die Vertiefungen 14, ebenfalls um die Befestigungsbohrungen 10 herum angeordnet. Die Vertiefungen 14 sind in dem Ausführungsbeispiel einem gängigen Mehrkant-Schraubenkopf entsprechend sechseckig geformt. Bei dem Befestigen der Messerklinge mit Schraubbolzen mit einem Sechskant-Schraubkopf kann dieser sich in der Vertiefung 14 nicht mitdrehen.

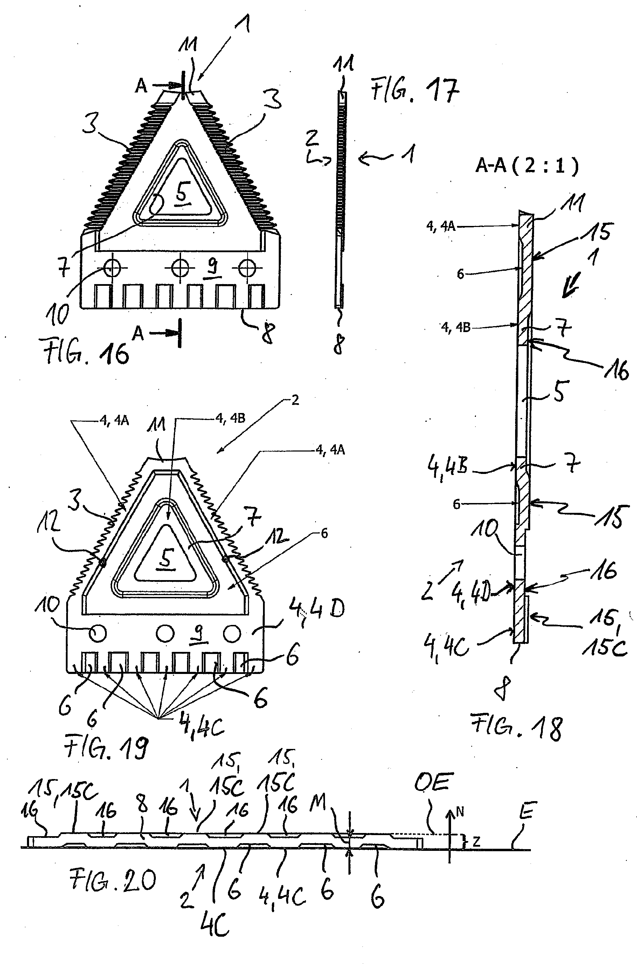

Die Figuren 16 bis 20 zeigen ein viertes Ausführungsbeispiel der erfindungsgemäßen Messerklinge in verschiedenen Ansichten. Die wesentlichen Merkmale entsprechen der Ausführungsform gemäß den Figuren 1 bis 5, weshalb gleiche Bezugszeichen gleiche Teile benennen und der Übersichtlichkeit halber teilweise weggelassen wurden und zur Vermeidung von Wiederholungen nicht erneut im Detail beschrieben werden. Die Ausführungsform der erfindungsgemäßen Messerklinge gemäß der Figuren 16 bis 20 kommt dem ersten Ausführungsbeispiel nahe, weist demgegenüber aber weitere Merkmale auf, welche die Klingenoberseite 1 betreffen.

In der Figur 16 ist die erfindungsgemäße Messerklinge gemäß der vierten Ausführungsform in einer Ansicht auf die Klingenoberseite 1 dargestellt. In der Figur 17 ist die Messerklinge aus Figur 16 in einer um 90 Grad gedrehten Ansicht von der Seite dargestellt, in der die Lage der Messerspitze 11 vorn und der Hinterkante 8 hinten, sowie die insgesamt flache Form der Messerklinge mit der Oberseite 1 und einer Unterseite 2 erkennbar sind. In der Figur 18 ist ein Schnitt entlang der Linie A-A aus Figur 16 in zweifacher Vergrößerung dargestellt. Die Figur 19 zeigt eine Ansicht auf die Unterseite 2 der Messerklinge und die Figur 20 zeigt wiederum eine gegenüber der Figur 16 um 90 Grad gedrehte Ansicht auf die Hinterkante 8 in einer vergrößerten Darstellung.

Nachfolgend wird auf die Figuren 16 bis 20 gemeinsam Bezug genommen. Die Ausführungsform der erfindungsgemäßen Messerklinge für ein Mähmesser einer landwirtschaftlichen Erntemaschine weist eine Oberfläche der Klingenunterseite 2 auf, welche aus der in der Ebene E (vgl. Figur 20) angeordneten Planfläche 4 und dem oberhalb der Ebene E verlaufenden Aussparungsbereich 6 zusammengesetzt ist, wie in den Figuren 18 und 19 zu erkennen ist. Die Höhe Z der Messerklinge entspricht dem maximalen Abstand zwischen der Klingenoberseite 1 und der Planfläche 4 in einer Normalenrichtung N zu der Ebene E, wie in Figur 20 dargestellt. Eine Oberfläche der Klingenoberseite 1 ist wiederum aus einer in einer oberen Ebene OE (Figur 20) angeordneten oberen Planfläche 15 und einem außerhalb der oberen Ebene OE verlaufenden Oberseitenbereich 16 zusammengesetzt.

Die Materialstärke M der Messerklinge entspricht dem Abstand zwischen der Klingenoberseite 1 und der Klingenunterseite 2, welcher in Normalenrichtung N gemessen wird. Die Materialstärke M der Messerklinge ist dabei erfindungsgemäß zumindest bereichsweise geringer, als die Höhe Z der Messerklinge, wie beispielhaft anhand einer Messstelle in der Figur 5 dargestellt. Die untere Ebene E und die obere Ebene OE sind vorzugsweise parallel zueinander ausgerichtet und um die Höhe Z der Messerklinge zueinander beabstandet.

An der Hinterkante 8 der Messerklinge an der Oberfläche der Klingenoberseite 1 sind vorzugsweise mehrere obere Teilflächen 15C der oberen Planfläche 15 angeordnet, wobei die oberen Teilflächen 15C jeweils dem Aussparungsbereich 6 an der Hinterkante 8 auf der Klingenunterseite 2 gegenüberliegend angeordnet sind. Die oberen Teilflächen 15C sind entlang der Hinterkante 8 jeweils von dem Oberseitenbereich 16 unterbrochen, wobei die Teilflächen 4C auf der Klingenunterseite 2 jeweils dem Oberseitenbereich 16 gegenüberliegen, sodass die oberen Teilflächen 15C entlang der Hinterkante 8 abwechselnd mit den Teilflächen 4C auf der Klingenunterseite 2 angeordnet sind. Dadurch lässt sich die erfindungsgemäße Messerklinge sowohl mit der Klingenunterseite 2 nach unten, als auch mit der Klingenoberseite 1 nach unten montieren. Die verringerte Fläche an der Hinterkante 8, die sich aus der in Figur 20 erkennbaren Wellenform ergibt, verringert darüber hinaus vorteilhaft die Reibung gegenüber die Messerklinge nach hinten abstützenden Führungselementen (nicht dargestellt).

### Bezugszeichenliste

- 1: Klingenoberseite
- 2: Klingenunterseite
- 3: Schneidenbereich
- 4: Planfläche
- 4A: Teilflächen der Planfläche in einem Schneidenbereich, Randteilflächen
- 4B: Teilflächen der Planfläche in einem Randbereich der Ausnehmung, Ausnehmungsteilflächen
- 4C: Teilflächen der Planfläche an einer Hinterkante der Messerklinge, hintere Teilflächen
- 4D: Teilflächen der Planfläche in einem Befestigungsbereich, Befestigungsteilflächen
- 5: Ausnehmungen
- 6: Aussparungsbereich
- 7: Randbereich der Ausnehmung
- 8: Hinterkante der Messerklinge
- 9: Befestigungsbereich
- 10: Befestigungsausnehmung, Bohrung
- 11: Messerspitze
- 12: Verschleißmarken
- 14: Vertiefung
- 15: Obere Planfläche
- 15C: Obere Teilflächen der oberen Planfläche an der Hinterkante
- 16: Oberseitenbereich
- OE: Obere Ebene
- E: Ebene
- N: Normalenrichtung
- Z: Höhe der Messerklinge

## Patentansprüche

1. Messerklinge für ein Mähmesser einer landwirtschaftlichen Erntemaschine, mit einer Klingenoberseite (1) und einer Klingenunterseite (2),
wobei eine Oberfläche der Klingenunterseite aus einer in einer Ebene (E) angeordneten Planfläche (4) und einem oberhalb der Ebene verlaufenden Aussparungsbereich (6) zusammengesetzt ist,
wobei eine Höhe der Messerklinge einem maximalen Abstand (Z) zwischen der Klingenoberseite und der Planfläche in einer Normalenrichtung (N) zu der Ebene entspricht
wobei eine Materialstärke der Messerklinge einem Abstand zwischen der Klingenoberseite und der Klingenunterseite entspricht,
und wobei die Materialstärke der Messerklinge zumindest bereichsweise geringer ist, als die Höhe der Messerklinge,
**dadurch gekennzeichnet,**
**dass** die Messerklinge mindestens eine Ausnehmung (5) aufweist, wobei die Ausnehmung in der Messerklinge angeordnet ist und wobei eine Teilfläche (4B) der Planfläche (4) der Oberfläche der Klingenunterseite (2) um die mindestens eine Ausnehmung herum angeordnet ist.

2. Messerklinge für ein Mähmesser einer landwirtschaftlichen Erntemaschine, mit einer Klingenoberseite (1) und einer Klingenunterseite (2),
wobei eine Oberfläche der Klingenunterseite aus einer in einer Ebene (E) angeordneten Planfläche (4) und einem oberhalb der Ebene verlaufenden Aussparungsbereich (6) zusammengesetzt ist,
wobei eine Höhe der Messerklinge einem maximalen Abstand (Z) zwischen der Klingenoberseite und der Planfläche in einer Normalenrichtung (N) zu der Ebene entspricht,
wobei eine Materialstärke der Messerklinge einem Abstand zwischen der Klingenoberseite und der Klingenunterseite entspricht,
und wobei die Materialstärke der Messerklinge zumindest bereichsweise geringer ist, als die Höhe der Messerklinge,
wobei an einer Hinterkante (8) der Messerklinge an der Oberfläche der Klingenunterseite (2) mehrere Teilflächen (4C) der Planfläche (4) angeordnet sind,
**dadurch gekennzeichnet,**
**dass** die Teilflächen (4C) an der Hinterkante (8) durch den Aussparungsbereich (6) voneinander getrennt sind.

3. Messerklinge nach Anspruch 2, **dadurch gekennzeichnet, dass** die Messerklinge mindestens eine Ausnehmung (5) aufweist, wobei eine Teilfläche (4B) der Planfläche (4) der Oberfläche der Klingenunterseite (2) um die Ausnehmung herum angeordnet ist.

4. Messerklinge nach einem der vorangehenden Ansprüche 1 oder 3, **dadurch gekennzeichnet, dass** die Messerklinge eine zentrale Ausnehmung (5) aufweist, wobei die Teilfläche (4B) der Planfläche (4) der Oberfläche der Klingenunterseite (2) um die Ausnehmung herum angeordnet ist.

5. Messerklinge nach einem der vorangehenden Ansprüche 1, 3 oder 4, **dadurch gekennzeichnet, dass** die Messerklinge zwei oder mehr Ausnehmungen (5) aufweist, wobei die Teilfläche (4B) der Planfläche (4) der Oberfläche der Klingenunterseite (2) um die Ausnehmungen herum angeordnet ist.

6. Messerklinge nach Anspruch 1, **dadurch gekennzeichnet, dass** an einer Hinterkante (8) der Messerklinge an der Oberfläche der Klingenunterseite (2) mehrere Teilflächen (4C) der Planfläche (4) angeordnet sind.

7. Messerklinge nach Anspruch 6, **dadurch gekennzeichnet, dass** die Teilflächen (4C) an der Hinterkante (8) durch den Aussparungsbereich (6) voneinander getrennt sind.

8. Messerklinge nach einem der vorangehenden Ansprüche 1 bis 5, **dadurch gekennzeichnet, dass** eine Oberfläche der Klingenoberseite (1) aus einer in einer oberen Ebene (OE) angeordneten oberen Planfläche (15) und einem außerhalb der oberen Ebene verlaufenden Oberseitenbereich (16) zusammengesetzt ist.

9. Messerklinge nach Anspruch 8, **dadurch gekennzeichnet, dass** an einer Hinterkante (8) der Messerklinge an der Oberfläche der Klingenoberseite (1) mehrere obere Teilflächen (15C) der oberen Planfläche (15) angeordnet sind.

10. Messerklinge nach Anspruch 9, **dadurch gekennzeichnet, dass** die oberen Teilflächen (15C) auf der Klingenoberseite (1) dem Aussparungsbereich (6) auf der Klingenunterseite (2) gegenüberliegend angeordnet sind.

11. Messerklinge nach einem der vorangehenden Ansprüche 9 oder 10, rückbezogen auf einen der Ansprüche 6 oder 7, **dadurch gekennzeichnet, dass** die oberen Teilflächen (15C) entlang der Hinterkante (8) abwechselnd mit den Teilflächen (4C) auf der Klingenunterseite (2) angeordnet sind.

12. Messerklinge nach einem der vorangehenden Ansprüche, **dadurch gekennzeichnet, dass** an mindestens einem Randbereich der Messerklinge eine Schnittkante ausgebildet ist, wobei die Oberfläche der Klingenunterseite mindestens in dem Randbereich eine Teilfläche (4A) der Planfläche (4) aufweist.

13. Messerklinge nach Anspruch 12, **dadurch gekennzeichnet, dass** an der Oberfläche der Klingenunterseite außerhalb der Teilfläche (4A) mindestens eine Verschleißmarke (12) zur Bestimmung eines Verschleißes an der Schnittkante angeordnet ist, wobei die Verschleißmarke eine in Normalenrichtung (N) zwischen der Planfläche (4) und dem Aussparungsbereich (6) liegende Höhe markiert.

14. Messerklinge nach einem der vorangehenden Ansprüche, **dadurch gekennzeichnet, dass** mindestens eine Befestigungsausnehmung (10) vorgesehen ist, wobei an der Oberfläche der Klingenunterseite eine Teilfläche (4D) der Planfläche (4) um die Befestigungsausnehmung herum angeordnet ist.

15. Verfahren zur Herstellung einer Messerklinge nach einem der vorangehenden Ansprüche,
**dadurch gekennzeichnet,**
**dass** mindestens ein Formgebungsschritt vorgesehen ist, bei dem die Messerklinge derart geformt wird, dass die Materialstärke der Messerklinge zumindest bereichsweise geringer ist, als die Höhe der Messerklinge.

## Claims

1. Knife blade for a cutting knife of an agricultural harvesting machine, with a blade top side (1) and a blade bottom side (2),
wherein a surface of the blade bottom side is composed of a planar surface (4) arranged in a plane (E) and a recess region (6) extending above the plane,
wherein a height of the knife blade corresponds to a maximum distance (Z) between the blade top side and the planar surface in a direction (N) normal to the plane,
wherein a material thickness of the knife blade corresponds to a distance between the blade top side and the blade bottom side,
and wherein the material thickness is in at least a part of the knife blade less than the height of the knife blade,
**characterized in,**
**that** the knife blade has at least one opening (5), wherein the opening is located in the knife blade and wherein a partial surface (4B) of the planar surface (4) of the surface of the blade bottom side (2) is arranged around the at least one opening.

2. Knife blade for a cutting knife of an agricultural harvesting machine, with a blade top side (1) and a blade bottom side (2),
wherein a surface of the blade bottom side is composed of a planar surface (4) arranged in a plane (E) and a recess region (6) extending above the plane,
wherein a height of the knife blade corresponds to a maximum distance (Z) between the blade top side and the planar surface in a direction (N) normal to the plane,
wherein a material thickness of the knife blade corresponds to a distance between the blade top side and the blade bottom side,
and wherein the material thickness is in at least a part of the knife blade less than the height of the knife blade,
wherein a plurality of partial surfaces (4C) of the planar surface (4) on the surface of the blade bottom side (2) are arranged at the rear edge (8) of the knife blade,
**characterized in,**
**that** the partial surfaces (4C) at the rear edge (8) are separated from each other by the recess region (6).

3. Knife blade according to claim 2, **characterized in that** the knife blade has at least one opening (5), wherein a partial surface (4B) of the planar surface (4) of the surface of the blade bottom side (2) is arranged around the opening.

4. Knife blade according to any of the preceding claims 1 or 3, **characterized in that** the knife blade has a central opening (5), wherein the partial surface (4B) of the planar surface (4) of the surface of the blade bottom side (2) is arranged around the opening.

5. Knife blade according to any of the preceding claims 1, 3 or 4, **characterized in that** the knife blade has two or more openings (5), wherein the partial surface (4B) of the planar surface (4) of the surface of the blade bottom side (2) is arranged around the openings.

6. Knife blade according to claim 1, **characterized in that** a plurality of partial surfaces (4C) of the planar surface (4) are arranged at a rear edge (8) of the knife blade on the surface of the blade bottom side (2).

7. Knife blade according to claim 6, **characterized in that** the partial surfaces (4C) at the rear edge (8) are separated from each other by the recess region (6).

8. Knife blade according to any of the preceding claims 1 to 5, **characterized in that** a surface of the blade top side (1) is composed of an upper planar surface (15) arranged in an upper plane (OE) and a top side region (16) extending outside the upper plane.

9. Knife blade according to claim 8, **characterized in that** a plurality of upper partial surfaces (15C) of the upper planar surface (15) are arranged at a rear edge (8) of the knife blade on the surface of the blade top side (1).

10. Knife blade according to claim 9, **characterized in that** the upper partial surfaces (15C) on the blade top side (1) are arranged opposite to the recess region (6) on the blade bottom side (2).

11. Knife blade according to one of the preceding claims 9 or 10, referenced back to one of the claims 6 or 7, **characterized in that** the upper partial surfaces (15C) are arranged along the rear edge (8) alternately with the partial surfaces (4C) on the blade bottom side (2).

12. Knife blade according to any of the preceding claims, **characterized in that** a cutting edge is formed on at least one edge region of the knife blade, wherein the surface of the blade bottom side comprises a partial surface (4A) of the planar surface (4) at least in the edge region.

13. Knife blade according to claim 12, **characterized in that** at least one wear mark (12) for determining wear at the cutting edge is arranged on the surface of the blade bottom side outside the partial surface (4A), wherein the wear mark marks a height in the normal direction (N) between the planar surface (4) and the recess region (6).

14. Knife blade according to any of the preceding claims, **characterized in that** at least one mounting recess (10) is provided, wherein a partial surface (4D) of the planar surface (4) is arranged around the mounting recess on the surface of the blade bottom side.

15. Method of manufacturing a knife blade according to any one of the preceding claims,
**characterized in,**
**that** at least one shaping step is provided in which the knife blade is shaped in such a way that the material thickness is in at least a part of the knife blade less than the height of the knife blade.

## Revendications

1. Lame pour couteau d'une moissonneuse agricole avec un côté supérieur de lame (1) et un côté inférieur de lame (2),
sachant qu'une surface du côté inférieur de lame est composée d'une surface plane (4) disposée dans un plan (E) et d'une zone de creux (6) passant au-dessus du plan,
sachant qu'une hauteur de lame correspond à une distance maximale (Z) entre le côté supérieur de lame et la surface plane dans une direction de la normale (N) vers le plan,
sachant qu'une épaisseur de matière de la lame correspond à une distance entre le côté supérieur de lame et le côté inférieur de lame,
et sachant que l'épaisseur de matière de la lame est au moins par endroits plus faible que la hauteur de la lame,
**caractérisée en ce que**,
la lame comporte au moins un évidement (5), sachant que l'évidement est disposé dans la lame et sachant qu'une partie de surface (4B) de la surface plan (4) de la surface du côté inférieur de lame (2) est disposée au moins autour d'un évidement.

2. Lame pour couteau d'une moissonneuse agricole avec un côté supérieur de lame (1) et un côté inférieur de lame (2),
sachant qu'une surface du côté inférieur de lame est composée d'une surface plane (4) disposée dans un plan (E) et d'une zone de creux (6) passant au-dessus du plan,
sachant qu'une hauteur de la lame correspond à une distance maximale (Z) entre le côté supérieur de lame et la surface plane dans une direction de la normale (N) vers le plan,
sachant qu'une épaisseur de matière de la lame correspond à une distance entre le côté supérieur de lame et le côté inférieur de lame,
et sachant que l'épaisseur de matière de la lame est au moins par endroits plus faible que la hauteur de la lame,
sachant que plusieurs parties de surface (4C) de la surface plane (4) sont disposées sur une arête arrière (8) de la lame sur la surface du côté inférieur de lame (2),
**caractérisée en ce que**,
les parties de surface (4C) sur l'arête arrière (8) sont séparées l'une de l'autre par la zone de creux (6) .

3. Lame selon la revendication 2, **caractérisée en ce que** la lame comporte au moins un évidement (5), sachant qu'une partie de surface (4B) de la surface plane (4) de la surface du côté inférieur de lame (2) est disposée autour de l'évidement.

4. Lame selon l'une quelconque des revendications précédentes 1 ou 3, **caractérisée en ce que** la lame comporte un évidement central (5), sachant que la partie de surface (4B) de la surface plane (4) de la surface du côté inférieur de lame (2) est disposée autour de l'évidement.

5. Lame selon l'une quelconque des revendications précédentes 1, 3 ou 4, **caractérisée en ce que** la lame comporte deux évidements (5) ou plus, sachant que la partie de surface (4B) de la surface plane (4) de la surface du côté inférieur de lame (2) est disposée autour des évidements.

6. Lame selon la revendication 1, **caractérisée en ce que** plusieurs parties de surface (4C) de la surface plane (4) sont disposées sur une arête arrière (8) de la lame sur la surface du côté inférieur de lame (2).

7. Lame selon la revendication 6, **caractérisée en ce que** les parties de surface (4C) sur l'arête arrière (8) sont séparées l'une de l'autre par la zone de creux (6) .

8. Lame selon l'une quelconque des revendications 1 à 5, **caractérisée en ce qu'**une surface du côté supérieur de lame (1) est composée d'une surface plane supérieure (15) disposée dans un plan supérieur (OE) et d'une zone de côté supérieur (16) disposée en dehors du plan supérieur.

9. Lame selon la revendication 8, **caractérisée en ce que** plusieurs parties de surface supérieures (15C) de la surface plane supérieure (15) sont disposées sur une arête arrière (8) de la lame sur la surface du côté supérieur de lame (1).

10. Lame selon la revendication 9, **caractérisée en ce que** les parties de surface supérieures (15C) sont disposées sur le côté supérieur de lame (1) opposées à la zone de creux (6) sur le côté inférieur de lame (2).

11. Lame selon l'une quelconque des revendications précédentes 9 ou 10, dépendantes de l'une quelconque des revendications 6 ou 7, **caractérisée en ce que** les parties de surface supérieures (15C) sont disposées le long de l'arête arrière (8) alternant avec les parties de surface (4C) sur le côté inférieur de lame (2).

12. Lame selon l'une quelconque des revendications précédentes, **caractérisée en ce qu'**une arête de coupe est constituée sur au moins une zone de bord de la lame, sachant que la surface du côté inférieur de lame comporte au moins dans la zone de bord une partie de surface (4A) de la surface plane (4).

13. Lame selon la revendication 12, **caractérisée en ce qu'**au moins un repère d'usure (12) est disposé sur la surface du coté inférieur de lame en dehors de la partie de surface (4A) pour la détermination d'une usure sur l'arête de coupe, sachant que le repère d'usure repère une hauteur située en direction de la normale (N) entre la surface plane (4) et la zone de creux (6).

14. Lame selon l'une quelconque des revendications précédentes, **caractérisée en ce qu'**au moins un évidement de fixation (10) est prévu, sachant qu'une partie de surface (4D) de la surface plane (4) est disposée autour de l'évidement de fixation sur la surface du côté inférieur de lame.

15. Procédé de fabrication d'une lame selon l'une quelconque des revendications précédentes,
**caractérisé en ce**
**qu'**au moins une étape de mise en forme est prévue, lors de laquelle la lame est formée de telle manière que l'épaisseur de matière de la lame est au moins par endroits plus faible que la hauteur de la lame.
